# EUROPÄISCHE PATENTANMELDUNG

(11) **EP 0 651 096 A1**
(43) Veröffentlichungstag der Anmeldung: **03.05.1995**
(21) Anmeldenummer: 94116716.5
(22) Anmeldetag: 23.10.1994
(51) Int. Cl.: E01C 19/20, A01C 15/12, A01C 15/18, A01C 17/00

(54) **Streufahrzeug**

(30) Priorität: 26.10.1993 DE 9316365 U
(71) Anmelder: Kiefer GmbH, D-84405 Dorfen-Stadt (DE)
(72) Erfinder: Kunstwadl, Korbinian, D-85656 Buch a.B. (DE)
(74) Vertreter: Patentanwälte Dipl.-Ing. R. Splanemann Dr. B. Reitzner Dipl.-Ing. K. Baronetzky

(57) **Zusammenfassung**

Ein Streufahrzeug mit einem Streugut-Vorratsbehälter und einer Zuführeinrichtung, über welche Streugut einem Schleuderteller zuführbar ist, ist dadurch **gekennzeichnet,** daß die Zuführeinrichtung (30) als Förderschnecke (34) ausgebildet ist und der Schleuderteller (32) von einer Streugut-Abgabestation (20) nach der Art eines Trommelstreuers entfernbar, insbesondere wegschwenkbar ist.

## Beschreibung

Die Erfindung betrifft ein Streufahrzeug gemäß dem Oberbegriff von Anspruch 1.

Bei derartigen Streufahrzeugen wird üblicherweise Streugut über eine Schütte einem Bereich oberhalb eines Schleudertellers zugeführt. Nachteil dieser Schutten ist, daß sie sich über die gesamte Fahrzeugbreite erstrecken müssen, um das in dem Streugut-Vorratsbehälter befindliche Streugut vollständig verwenden zu können, was jedoch eine beträchtliche Bauhöhe der Schütten bedingt, die das gesamte Fahrzeug kopflastig macht. Grund für die Kopflastigkeit ist, daß der Schleuderteller für die wirksame und gleichmäßige Streuleistung eine Minimalhöhe über dem Boden einhalten sollte, wobei zugleich auch die Bodenfreiheit des Fahrzeugs berücksichtigt werden muß, wie auch, daß aufgrund der zwischengeschalteten Schütte der Vorratsbehälter um ein entsprechendes Maß nach oben verlagert werden muß. Eine Kopflastigkeit des Fahrzeugs ist nicht nur für die Fahreigenschaften, sondern in manchen Fällen auch beim Beladen ungünstig.

Es ist an sich bekannt, Schüttgut über Förderschnecken abzuführen. Nachteilig ist hierbei der vergleichsweise starke erforderliche Antrieb und entsprechende Verschleiß der Förderschnecke, zumal, wenn körniges Schüttgut aus einem größeren oberhalb befindlichen Vorratsbehälter gefördert werden soll.

Die bekannten Streufahrzeuge mit dem Schleuderteller weisen zwar die Möglichkeit der Regulierung der Streuweite auf; üblicherweise sind sie aber auf eine Nennstreubreite von beispielsweise dem dreifachen der Fahrzeugbreite ausgelegt. Die Streubreite läßt sich in gewissem Umfang über die Drehzahl des Schleudertellers steuern. Wenn die Streubreite jedoch auf die Fahrzeugbreite heruntergefahren werden soll, wird das Streubild unbefriedigend. Dementsprechend werden Schleuderstreuer üblicherweise für breite Straßen eingesetzt, während es bekannt ist, für Gehwege Streufahrzeuge mit einem Walzen- oder Trommelstreuer einzusetzen. Diese bieten zwar eine gute Streuleistung; die Streubreite steht jedoch stets fest und entspricht im wesentlichen der Fahrzeugbreite.

Dementsprechend liegt der Erfindung die Aufgabe zugrunde, ein Streufahrzeug gemäß dem Oberbegriff von Anspruch 1 zu schaffen, das trotz der universellen Verwendbarkeit hinsichtlich der Straßenlage Vorteile aufweist und aufgrund der universellen Verwendbarkeit erhebliche betriebliche Einsparungen ermöglicht.

Diese Aufgabe wird erfindungsgemäß durch Anspruch 1 gelöst. Vorteilhafte Weiterbildungen ergeben sich aus den Unteransprüchen.

Besonders günstig ist es, daß erfindungsgemäß die Aufgaben eines Gehwegstreuers und eines Straßenstreuers mit einem einzigen Streufahrzeug geleistet werden können. Dennoch ist die Kopflastigkeit geringer als bei vielen der bekannten Streufahrzeuge, was der Straßenlage und Wendigkeit zugutekommt.

Erfindungsgemäß wird dies gelöst durch die Kombination der Ausbildung der Zufuhreinrichtung für das Streugut als Förderschnecke und der Anbringung des Schleudertellers an einem entfernbaren Körper, beispielsweise einem Schwenkkörper, der auch die Förderschnecke aufnimmt, und zwar vor dem Abgabeschlitz einer Streugut-Abgabestation, die nach der Art eines Trommelstreuers ausgebildet ist. Eine besonders einfache Lösung hierfür ist es, den Körper mit der Förderschnecke und dem Schleuderteller schwenkbar aufzuhängen, wobei es sich versteht, daß auch eine andere Art der Entfernung, wie beispielsweise ein Verschieben möglich ist.

Überraschend läßt sich die erfindungsgemäße Förderschnecke einsetzen, ohne daß ein erheblicher Verschleiß oder eine besonders hohe Antriebsleistung erforderlich wäre. Offenbar aufgrund der Wirkung der Streugut-Abgabestation wird die Förderschnecke nicht von dem Druck des Streuguts aus dem Vorratsbehälter belastet, so daß sie nicht "mahlt" und keinem, höchstens ganz geringem, Verschleiß unterworfen ist.

Demgegenüber kann die Schleuderstreu-Abgabestation in an sich bekannter Weise die robuste Kombination aus einer Rührwalze und einer mit dieser ggf. kämmenden Dosierwalze aufweisen. Unmittelbar, d.h., wenige Zentimeter unterhalb der Dosierwalze kann dann bereits die Förderschnecke angeordnet sein, die sich bevorzugt über die gesamte Fahrzeugbreite erstreckt und so sämtliches aus dem Abgabeschlitz der Abgabestation abgegebenes Streugut erfaßt und der Mitte zuführt.

Gegenüber der Anordnung von 2 Schleudertellern, wie sie zur Verminderung der Bauhöhe aufgrund des Ersetzens der einen Schütte durch 2 nebeneinander angeordnete Schütten auch bereits vorgeschlagen worden ist, ergibt sich der Vorteil, daß kein streugut-Überlappungsbereich auf der Straße entsteht, der regelmäßig überstreut wird. Bei Ausbildung des Schleudertellers aus Kunststoff oder Gummi ist dieser nicht nur korrosionssicher, sondern auch besonders leicht. Auch die Förderschnecke, die keines besonders starken Antriebs bedarf, kann in Leichtbauweise ausgeführt sein. Damit bedarf der gesamte Schwenkkörper keiner besonders massiven Ausgestaltung, auch wenn getrennte Antriebe für Förderschnecke und Schleuderteller vorgesehen sind.

Besonders günstig ist es, wenn der Schwenkpunkt des Schwenkkörpers oberhalb der Förderschnecke und der Schleuderteller hinter der Förderschnecke angeordnet sind. Hierdurch wird bereits aufgrund des Gewichts der Schwenkkörper mit seinem Einlaß an den Abgabeschlitz der Abgabestation angedrückt und es ist für das Wegschwenken lediglich erforderlich, den Schwenkkörper hochzuziehen, beispielsweise mittels eines Bowdenzugs, oder gewünschtenfalls hydraulisch.

Es versteht sich auch, daß gewünschtenfalls die Schleuderstreustellung wie auch die Trommelstreustellung des Schwenkkörpers je als Raststellungen ausgebildet sein können.

Bevorzugt ist die Förderrate der Förderschnecke etwas größer als die Förderrate der Abgabestation. Die Leistung im Trommelstreubetrieb ist hierdurch zwar um das entsprechende Maß geringer als in der Schleuderstreustellung. Aufgrund der geringeren Streubreite in der Trommelstreustellung ist dies erwünscht, und eine Verstopfungsneigung ist sicher ausgeschlossen.

In an sich bekannter Weise kann die Wurfweite des Streuguts über die Drehzahl des Schleudertellers eingestellt werden, die hierzu unabhängig, jedoch bevorzugt fahrtgeschwindigkeitsabhängig, regelbar ist.

Alle Antriebe können getrennt ausgeführt sein oder es kann der Antrieb der Abgabestation mit dem Antrieb der Förderschnecke kombiniert werden, beispielsweise über ein durch das Verschwenken in Eingriff gelangendes Zahnradpaar, wobei ein Zahnrad an der Dosierwalze und ein weiteres Zahnrad an der Förderschnecke angebracht ist. Es versteht sich, daß die Zahnraddurchmesser dann entsprechend dem Verhältnis der gewünschten Förderraten gewählt sein können. Auch versteht es sich, daß in an sich bekannter Weise die Antriebe je fahrtgeschwindikeitsabhängig gesteuert werden können.

Weitere Einzelheiten, Vorteile und Merkmale ergeben sich aus der nachstehenden Beschreibung eines Ausführungsbeispiels anhand der Zeichnung.

Es zeigen:
- Fig. 1: eine schematisierte Seitenansicht eines erfindungsgemäßen Streufahrzeugs in einer Ausführungsform, und zwar in der Trommelstreustellung;
- Fig. 2: die Ausführungsform des Streufahrzeugs gemäß Fig. 1 in der Schleuderstreustellung;
- Fig. 3a: und 3b Ansichten des Streubildes, das mit dem erfindungsgemäßen Streufahrzeug in den Stellungen gemäß den Fig. 1 bzw. 2 erzeugt werden kann;
- Fig. 4: eine Seitenansicht des Schwenkkörpers in der Trommelstreustellung, sowie die Streugut-Abgabestation;
- Fig. 5: eine Ansicht der Streugut-Abgabestation sowie des Schwenkkörpers in der Schleuderstreustellung.

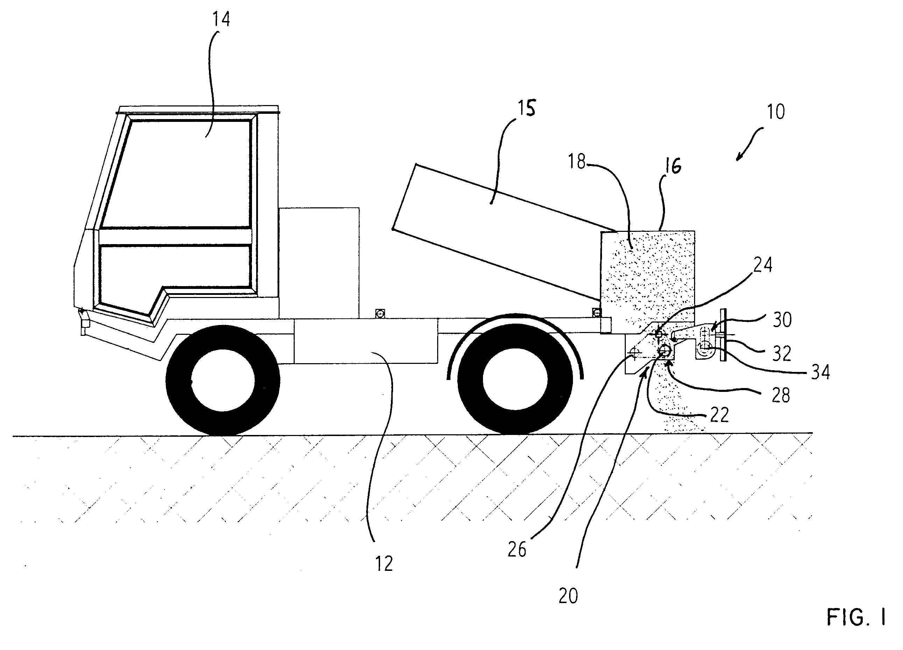

Das in Fig. 1 dargestellte Streufahrzeug 10 weist ein Fahrgestell 12 auf, auf dem vorne eine Fahrerkabine 14 und im hinteren Bereich eine Ladebrücke 15 und ein Streugut-Vorratsbehälter 16 angebracht ist. Der Streugut-Vorratsbehälter 16 kann durch Kippen der nach hinten abfallend schräg auf dem Fahrgestell 12 dargestellten Ladebrücke 15 befüllt werden. Die dargestellte Schrägstellung entspricht etwa dem Schüttwinkel des Streuguts 18.

Der Streugut-Vorratsbehälter 16 mündet an seinem rückwärtigen Ende an einer Streugut-Abgabestation 20. Die streugut-Abgabestation weist sich je quer über die Breite des Fahrzeugs erstreckende Walzen, nämlich eine Dosierwalze 22 und eine Rührwalze 24 auf. Die Walzen sind über einen gemeinsamen Antrieb 26 angetrieben.

Unterhalb der Dosierwalze 22 ist ein Abgabeschlitz 28 vorgesehen. Wenn der Antrieb 26 betätigt wird, geben Stacheln der Rührwalze 24 je kurzzeitig Bereiche der Dosierwalze 22 frei, so daß Streugut in begrenztem Maße dort austreten kann und über den Abgabeschlitz 28 das Streufahrzeug 10 verläßt. Gleichmäßig über die Breite des Abgabeschlitzes 28 verteilt fällt es auf den Untergrund des Streufahrzeugs, also entweder auf die Straße oder den Gehweg.

In der Darstellung gemäß Fig. 1 ist die Trommelstreustellung dargestellt, in welcher das erfindungsgemäße Streufahrzeug 10 nach der Art eines Walzen- oder Trommelstreuers arbeitet. Eine Zuführeinrichtung 30 für einen Schleuderteller 32, welche Zuführeinrichtung 30 eine Förderschnecke 34 aufweist, ist nicht in Betrieb und von dem Abgabeschlitz 28 entfernt.

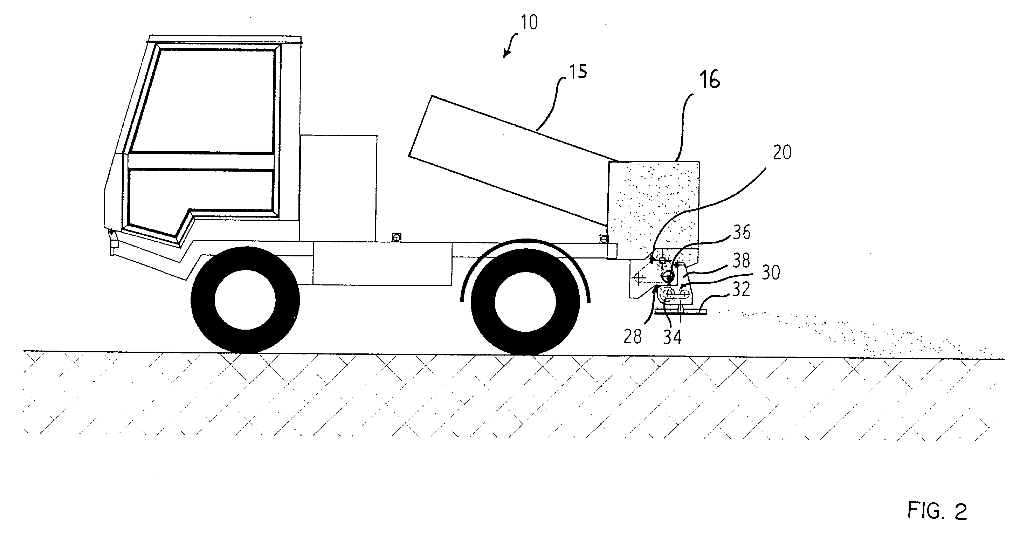

In der Darstellung gemäß Fig. 2 ist das Fahrzeug gemäß Fig. 1 in der Schleuderstreustellung dargestellt. Gleiche Teile sind hier wie auch in den weiteren Figuren mit gleichen Bezugszeichen bezeichnet. In dieser Stellung arbeitet die Streugut-Abgabestation 20 in der gleichen Weise wie in der Trommelstreustellung. Das den Abgabeschlitz 28 verlassende Streugut gelangt jedoch nicht auf Straße oder Gehweg, sondern in den Einlaß 36 eines Schwenkkörpers 38, in dem die Förderschnecke 34 und an dem der Schleuderteller 32 gelagert ist. Wie aus Fig. 2 ersichtlich ist, gelangt das Streugut von der Förderschnecke 34 auf den Schleuderteller 32, der sich um seine vertikale Achse dreht und das Streugut mit einer entsprechenden Wurfweite über Straße oder Gehweg und Radweg verteilt. Weitere Einzelheiten des Aufbaus sind weiter unten erläutert.

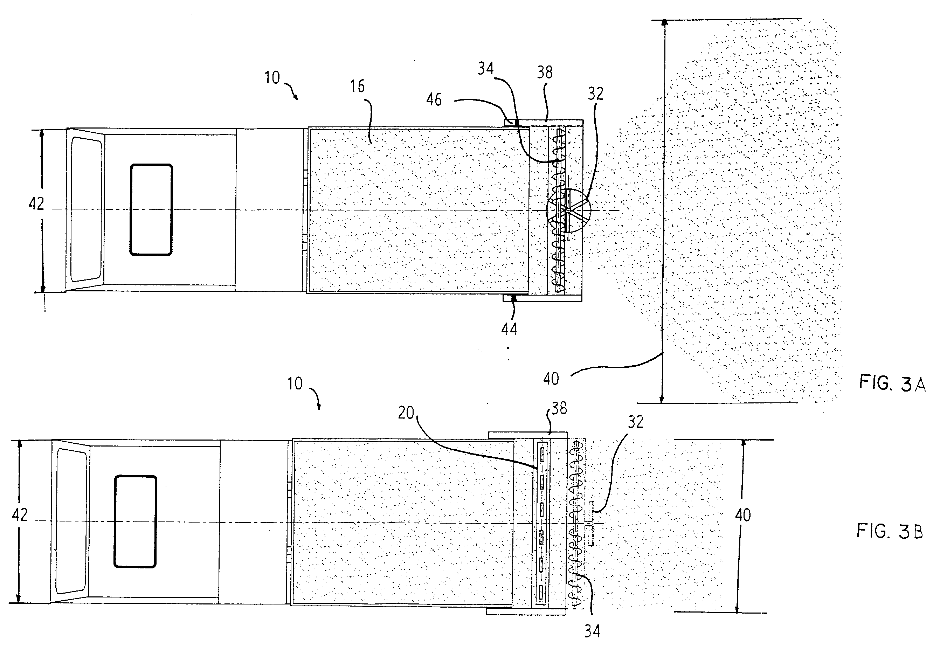

In Fig. 3a ist das Streubild des erfindungsgemäßen Streufahrzeugs 10 in der Schleuderstreustellung dargestellt. Es ist ersichtlich, daß die Streubreite 40 erheblich größer als die Fahrzeugbreite 42 ist. Aus Gründen der Einfachheit der Darstellung ist hier eine Streubreite 40 dargestellt, die etwa doppelt so groß wie die Fahrzeugbreite 42 ist. Versuche haben ergeben, daß mit einem Streufahrzeug 10 mit einer Breite von unter 1,5 m, das für den Streudienst auf reinen Gehwegen geeignet ist, eine Streubreite 40 von 6 m ohne weiteres realisierbar ist. Dies bedeutet, daß Straßen in Wohngebieten in einem Arbeitsgang ohne weiteres gestreut werden können, und mit dem gleichen Streufahrzeug die betreffenden Gehwege ebenfalls versorgt werden können.

Aus Fig. 3a ist ersichtlich, daß der Schleuderteller 32 mit 6 sich gleichmäß über den Umfang erstreckenden radialen Rippen versehen ist. Er besteht in diesem Ausführungsbeispiel aus Kunststoff und ist insofern korrosionssicher und vergleichsweise leicht. Es versteht sich, daß auch ein Edelstahl-Schleuderteller oder andere Ausgestaltungen des Schleudertellers anstelle der dargestellten Ausführungsform ohne weiteres eingesetzt werden können.

Aus Fig. 3a ist ferner ersichtlich, daß sich die Förderschnecke 34 über die gesamte Fahrzeugbreite erstreckt. Während der Schleuderteller 32 etwa in der Fahrzeuglängsachse angeordnet ist, weist die Förderschnecke 34 seitlich der Fahrzeuglängsachse 2 gegenläufige Wendeln auf, so daß das Streugut, sobald es in den Eingriff der Förderschnecke gelangt, in die Fahrzeugmitte, d.h. zum Schleuderteller gefördert wird. Der Schwenkkörper 38 ist seitlich in Schwenklagern 44 und 46 an dem Streugut-Vorratsbehälter 16 gelagert und weist unmittelbar oberhalb des Schleudertellers 32 eine Öffnung auf, durch die hindurch das von der Förderschnecke 34 geförderte Streugut auf den Schleuderteller 32 fällt.

Die Darstellung gemäß Fig. 3b zeigt das Streubild des Streufahrzeugs 10 in der Trommelstreustellung. Wie ersichtlich ist, entspricht die Streubreite 40 etwa der Fahrzeugbreite 42. Das Streugut wird ausschließlich über die Streugut-Abgabestation 20 abgegeben, während der Schwenkkörper 28 nach hinten hochgeklappt und außer Funktion ist.

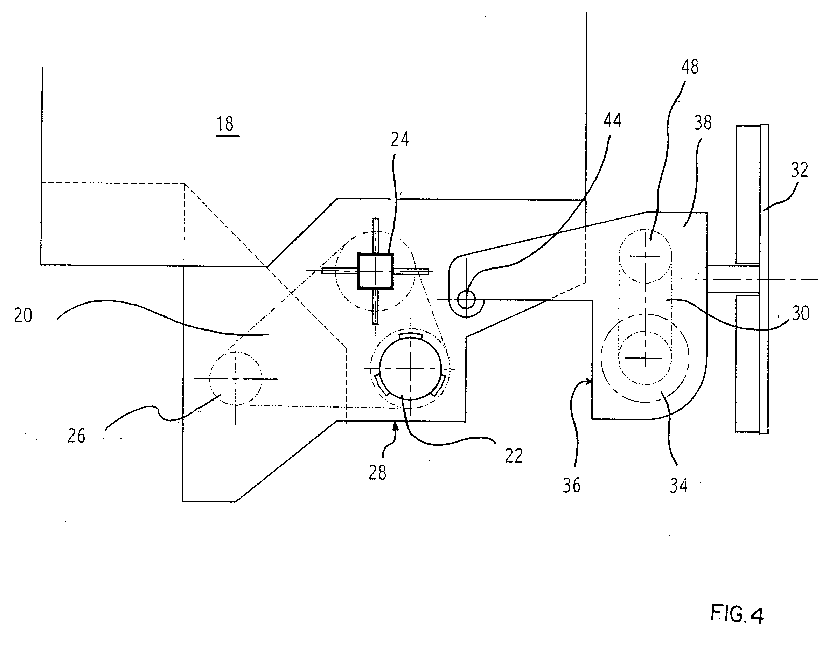

Diese Stellung ist auch in Fig. 4 in vergrößerter Ansicht ersichtlich. Wie dort dargestellt ist, treibt der Antrieb 26 die Rührwalze 24 und die Dosierwalze 22 gemeinsam an, beispielsweise über einen Keilriemen, einen Zahnriemen oder eine Kette. Durch die Wirkung der hierdurch gebildeten Streugut-Abgabestation 20 wird das Streugut 18 dosiert zum Abgabeschlitz 28 bewegt, und zwar über die gesamte Breite desselben. Die Drehzahl des Antriebs 26 ist hierbei fahrtgeschwindigkeitsabhängig gesteuert, so daß die Streustärke in bekannter Weise unabhängig von der Fahrgeschwindigkeit gleich bleibt. Der Antrieb 26 weist - bezogen auf die Trommelstreustellung - erhebliche Leistungsreserven auf.

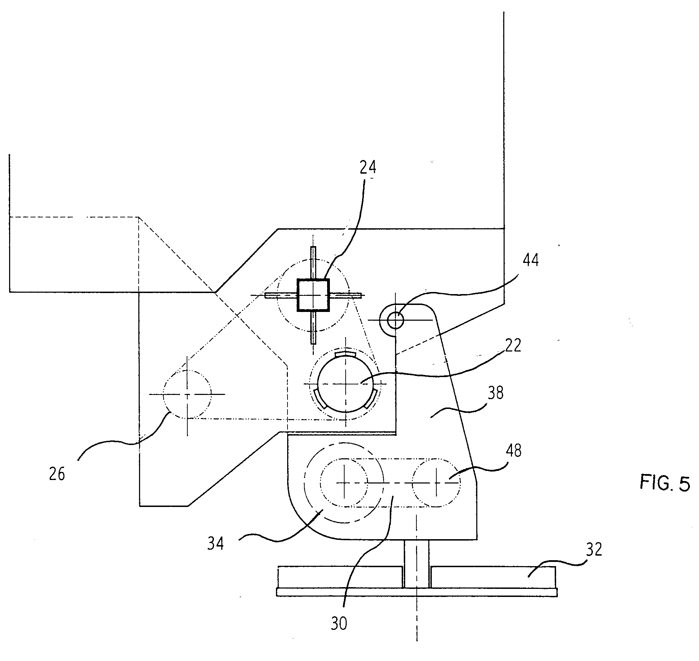

Wie aus Fig. 4 ersichtlich ist, liegt der Schwenkpunkt des Schwenkkörpers 38 mit dem dortigen Schwenklager 34 oberhalb und etwas hinter der Dosierwalze 22. Das Eigengewicht des Schwenkkörpers 38 und der dort angebrachten Teile zieht den Schwenkkörper in die in Fig. 5 dargestellte Schleuderstreustellung, während ein nicht dargestellter Betätigungsmechanismus den Schwenkkörper 38 in der nach oben gezogenen Stellung gemäß Fig. 4 hält.

Die Zuführeinrichtung 30 weist gemäß der Darstellung in Fig. 4 neben der Förderschnecke 34 einen Antrieb 48 auf, der unabhängig von dem Antrieb 26 gesteuert werden kann. In der in Fig. 4 dargestellten Trommelstreustellung ist der Antrieb 48 wie auch ein nicht dargestellter Antrieb des Schleudertellers 32 aus Sicherheitsgründen automatisch gesperrt. In dieser Stellung ist der Einlaß 36 des Schwenkkörpers 38 deutlich von dem Abgabeschlitz 28 getrennt.

Wie aus Fig. 5 ersichtlich ist, überlappt in der dort dargestellten Schleuderstreustellung der Einlaß 36 den Abgabeschlitz 28. Die Überlappung erfolgt dergestalt, daß der Einlaß eine größere Fläche überspannt als der Abgabeschlitz, so daß an dieser Stelle kein Verstopfen auftreten kann.

Beim Überführen in die Schleuderstreustellung gemäß Fig. 5 wird automatisch die Drehzahl des Antriebs 26 erhöht, und zwar im Verhältnis der Schleuderstreubreite 40 gemäß Fig. 3a zu der Schleuderstreubreite 40 gemäß Fig. 3b. Zugleich wird automatisch der Antrieb 48 sowie auch der Antrieb des Schleudertellers 32 eingeschaltet. Mit diesen Maßnahmen ist es möglich, praktisch auch während der Fahrt auf eine beispielsweise auf das dreifache vergrößerte Streubreite umzuschalten, wenn dies gewünscht ist. Wie aus Fig. 5 weiter ersichtlich ist, ist der Schwenkpunkt des Schwenkkörpers 38 dergestalt vorgesehen, daß die Achse des Schleudertellers 32 noch hinter ihm liegt. Damit erfolgt ein Andrücken des Einlasses 36 an den Abgabeschlitz 28, und es bedarf keiner weiteren Kraftaufbringung, um den Schwenkkörper 38 in der Schleuderstreustellung zu halten.

Gemäß einer abgeänderten Ausführungsform, die hier nicht dargestellt ist, weisen die Dosierwalze 22 und die Förderschnecke 34 je Zahnräder auf, die in der Schleuderstreustellung miteinander kämmen. Der Antrieb 48 kann dann entfallen, und das Drehzahlverhältnis ist so bemessen, daß die Förderrate der Förderschnecke 34 größer als die Förderrate der Dosierwalze 22 ist.

## Patentansprüche

1. Streufahrzeug, mit einem Streugut-Vorratsbehälter und einer Zuführeinrichtung, über welche Streugut einem Schleuderteller zuführbar ist, dadurch **gekennzeichnet,** daß die Zuführeinrichtung (30) als Förderschnecke (34) ausgebildet ist und der Schleuderteller (32) von einer Streugut-Abgabestation (20) nach der Art eines Trommelstreuers entfernbar, insbesondere wegschwenkbar ist.

2. Streufahrzeug nach Anspruch 1, dadurch gekennzeichnet, daß die Streugut-Abgabestation (20) als Trommelstreuer mit einer Dosierwalze (22) und einer Rührwalze (24) ausgebildet ist.

3. Streufahrzeug nach einem der vorhergehenden Ansprüche, dadurch gekennzeichnet, daß getrennte Antriebe (26, 48) für den Schleuderteller (32) einerseits und die Zuführeinrichtung (30) sowie die Streugut-Abgabestation (20) andererseits vorgesehen sind.

4. Streufahrzeug nach Anspruch 1 oder 2, dadurch gekennzeichnet, daß je getrennte Antriebe für den Schleuderteller, die Förderschnecke und den Trommelstreuer vorgesehen sind.

5. Streufahrzeug nach einem der Ansprüche 1 bis 3, dadurch gekennzeichnet, daß die Förderschnecke (34) in einer Schleuderstreustellung über ein an der Streugut-Abgabestation (20), insbesondere der Dosierwalze (22), angebrachtes Zahnrad mitläuft.

6. Streufahrzeug nach einem der vorhergehenden Ansprüche, dadurch gekennzeichnet, daß die Förderschnecke (34) sich in der Schleuderstreustellung unter der Streugut-Abgabestation (20) befindet und ein Einlaß (36) eines Schwenkkörpers (38) einen Abgabeschlitz (28) der Streugut-Abgabstation (20) vollständig abdeckt.

7. Streufahrzeug nach einem der vorhergehenden Ansprüche, dadurch gekennzeichnet, daß lediglich eine Förderschnecke (34) vorgesehen ist, die auf die Fahrzeugmitte zu laufende gegensinnige Wendein aufweist und sich quer über die Fahrzeugbreite erstreckt und daß lediglich ein Schleuderteller (32) mittig, etwa in der Fahrzeuglängsachse, angeordnet ist.

8. Streufahrzeug nach einem der vorhergehenden Ansprüche, dadurch gekennzeichnet, daß eine Schwenkbewegung eines Schwenkkörpers (38) in die Schleuderstreustellung, in welchem Schwenkkörper (38) die Förderschnecke (34) aufgenommen ist und an welchem der Schleuderteller (32) gelagert ist, den Antrieb (48) für die Förderschnecke (34) und den Schleuderteller (32) dann einschaltet, wenn die Streugut-Abgabestation (20) eingeschaltet ist.

9. Streufahrzeug nach einem der vorhergehenden Ansprüche, dadurch gekennzeichnet, daß die Förderrate sowohl der Förderschnecke (34) als auch des Schleudertellers (32) größer als die Förderrate der Streugut-Abgabestation (20) und insbesondere etwa 20% größer als diese ist.

10. Streufahrzeug nach einem der vorhergehenden Ansprüche, dadurch gekennzeichnet, daß der Schwenkpunkt eines Schwenkkörpers (38) zur Aufnahme der Förderschnecke (34) oberhalb der Förderschnecke (34) ist und die Achse des Schleudertellers (32) bezogen auf das Fahrzeug (10) hinter der Achse der Förderschnecke (34) verläuft.

11. Streufahrzeug nach einem der vorhergehenden Ansprüche, dadurch gekennzeichnet, daß der Schleuderteller (32) aus Kunststoff oder Gummi besteht.
